# EUROPÄISCHE PATENTSCHRIFT

(11) **EP 2 282 451 B1**
(45) Veröffentlichungstag und Bekanntmachung des Hinweises auf die Patenterteilung: **10.10.2018**
(21) Anmeldenummer: 10007448.3
(22) Anmeldetag: 19.07.2010
(51) Int. Cl.: H04L 12/407, H04L 12/28, H04L 29/06, H04H 20/00, H04H 60/00, H04H 60/04, H04N 5/222, H04N 21/222, H04N 21/845, H04L 12/40

(54) **Verteilerkopf mit Bussystem**
Headend with bus system
Tête de répartiteur doté d'un système de bus

(30) Priorität: 27.07.2009 DE 102009034821; 30.10.2009 DE 102009051494
(43) Veröffentlichungstag der Anmeldung: 09.02.2011
(73) Patentinhaber: Rohde & Schwarz GmbH & Co. KG, 81671 München (DE)
(72) Erfinder: Brauer, Mike, 13437 Berlin (DE); Zurek-Terhardt, Günther, 15566 Schöneiche (DE)
(74) Vertreter: Körfer, Thomas

(56) Entgegenhaltungen:
- EP-A1- 0 127 967
- WO-A1-02/17100
- DE-A1-102004 007 746
- US-A- 5 448 225
- US-A1- 2007 009 112
- US-B1- 7 072 365

## Beschreibung

Die Erfindung betrifft einen Verteilerkopf, im Folgenden Headend, mit Bussystem. Unter einem Headend wird im Rahmen dieser Anmeldung ein Verteilerkopf verstanden, der ankommende Daten zentral empfängt und verteilt und auslaufende Daten zentral bündelt.

In der digitalen Rundfunktechnik werden bis heute fast ausschließlich unidirektionale Punkt-zu-Punkt-Übertragungen verwendet. Die gängigste Übertragungsverbindung zur Übertragung von unkomprimierten Audio- und Video-Daten basiert auf dem Society-of-Motion-Picture-and Television-Engineers(SMPTE)-Standard. Zu den wesentlichen SMPTE-Standards zählen SMPTE 259M für Standard-Definition-Serial-Digital-Interface(SD-SDI)-Übertragung, SMPTE 292 M für High-Definition-Serial-Digital-Interface(HD-SDI)-Übertragung, SMPTE 372M für Dual-Link-High-Definition-Serial-Digital-Interface-Übertragung (zwei HD-SDI-Verbindungen über zwei Leitungen) und SMPTE 424M für 3G HD-SDI (zwei HD-SDI-Verbindungen über eine einzige Leitung). Die gängigste Übertragungsverbindung zur Übertragung von komprimierten Audio- und Video-Daten basiert auf dem Asynchronous-Serial-Interface(ASI)-Standard nach EN 50083-9. Diese Übertragungsverbindungen werden sowohl innerhalb eines Headends als auch an den Schnittstellen am Eingang und Ausgang des Headends benutzt.

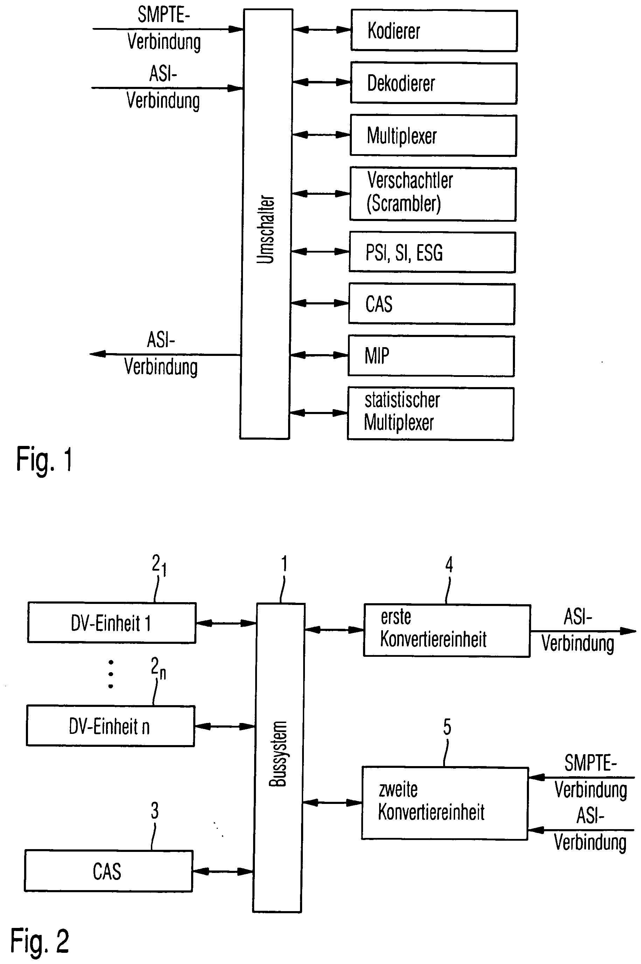

Die Verbindung zwischen der SMPTE- und/oder ASI-Verbindung und den einzelnen Funktionseinheiten bzw. Baugruppen des Headends, beispielsweise Kodierer, Dekodierer, Multiplexer usw., erfolgt entweder kabelgebunden als 1-zu-1-Drahtverbindung oder, wie in Fig. 1 dargestellt ist, über einen Umschalter, sogenannter Routing-Switcher. Dieser Umschalter ermöglicht eine direkte kabelgebundene Verbindung zwischen jeder SMPTE- und ASI-Verbindung und jeder Funktionseinheit des Headends.

Das Umschalten zwischen zwei Verbindungen mittels Routing Switcher erfolgt nachteilig nicht automatisch, sondern muss über eine zusätzliche Ansteuerlogik für den Umschalter bewerkstelligt werden. Auch ist keine dynamische Verteilung der in einem Datenstrom enthaltenen Datenpakete auf unterschiedliche Leitungen an den Schnittstellen des Headends oder auf unterschiedliche Funktionseinheiten des Headends möglich, da ein Umschalter eine statische Verbindung während der gesamten Übertragungszeit eines Datenstroms darstellt.

Die DE 10 2004 007 746 A1 beschreibt einen Transferserver, der zur Umwandlung von im Bus-System transferierbaren Datenpaketen in Datenpakete, die in einer Punkt-zu-Punkt-Übertragungsverbindung transferierbar sind, und auch umgekehrt, zur Umwandlung von in der Punkt-zu-Punkt-Übertragungsverbindung transfiererbaren Datenpaketen im Bus-System transferierbare Datenpakete, geeignet ist.

Die US 2007/0009112 A1 offenbart eine Radiostation, die sowohl in einem Manuell-Modus als auch in einem Computer-Modus betrieben werden kann. Die Radiostation kann an analoge und digitale Eingabeeinheiten angeschlossen werden. Die Radiostation besteht aus einem virtuellen Datenbus, der Mittel zur Kommunikation von digitalen und analogen Informationen beinhaltet. Das Dokument offenbart auch einen Computer, einen Mischer und analoge/digitale Funktionseinheiten.

Die EP 0 127 967 A1 offenbart ein Fernsteuersystem, welches in einem Fernsehstudio eingesetzt wird, um eine Vielzahl von Geräten, wie beispielsweise Videorekordern und Videoeditiergeräten zu steuern. Das System besteht aus mehreren Netzwerkstationen, die jede mindestens eine Netzwerkschnittstelle aufweisen. Die einzelnen Netzwerkstationen sind über einen Datenbus mit einander verbunden. Des Weiteren besteht das System auch aus einer Vielzahl von Geräten, die gesteuert werden und einer Vielzahl von Steuerkonsolen, um die Steuerbefehle einzugeben, wobei die Steuerkonsolen und die Geräte mit den Netzwerkschnittstellen verbunden sind.

Die US 5,448,225 offenbart einen Verteilerkopf in einem Rundfunk-Übertragungssystem mit einem Bussystem, einer busfähigen Verarbeitungseinheit zur Durchführung von Signal- und/oder Datenverarbeitungsfunktionen und einer Konvertierungseinheit zur Umwandlung von im Bussystem transferierbaren Datenpaketen in X.25 Datenpakete und zur Umwandlung von X.25 Datenpakete im Bussystem transferierbare Datenpakete.

Aufgabe der Erfindung ist es deshalb, eine Vorrichtung zu schaffen, mit der die in einem Datenstrom enthaltenen Datenpakete zwischen den einzelnen Funktionseinheiten eines Headends und zwischen den Funktionseinheiten des Headends und den Schnittstellen des Headends automatisch geschaltet und dynamisch verteilt werden können.

Die Erfindung wird durch einen Verteilerkopf (Headend) mit einem Bussystem mit den Merkmalen des Patentanspruchs 1 gelöst. Vorteilhafte technische Erweiterungen sind in den abhängigen Patentansprüchen aufgeführt.

Erfindungsgemäß werden die in einem Headend integrierten Funktionen auf mindestens einer Verarbeitungseinheit implementiert, die mit einem Bussystem verbunden ist. Zusätzlich sind erfindungsgemäß an das Bussystem Konvertierungseinheiten zur Umwandlung von auf dem Bussystem transferierbaren Datenpaketen auf Datenpakete, die in Punkt-zu-Punkt-Übertragungssystemen transferierbar sind, angeschlossen.

Auf diese Weise müssen Datenströme nicht mehr physikalisch über eine gesteuerte Drahtverbindung zwischen den Baugruppen innerhalb des Headends oder zwischen den Baugruppen und den Schnittstellen des Headends übertragen werden, sondern können logisch über die in jedem Datenpaket des Datenstroms enthaltene Quell- und Zieladresse zwischen den einzelnen Baugruppen und Schnittstellen des Headends automatisch transferiert werden. Die Zuordnung einer Quell- und Zieladresse zu jedem Datenpaket eines Datenstroms ermöglicht eine dynamische Verteilung der einzelnen zu einem transferierenden Datenstrom gehörigen Datenpakete auf unterschiedliche Baugruppen und/oder Schnittstellen. Außerdem bietet ein Bussystem einen bidirektionalen Datenverkehr im Headend (Vollduplexfähigkeit eines Bussystems), während bei einer Punkt-zu-Punkt-Verbindung für jede Datenrichtung jeweils eine Kabelverbindung vorzusehen ist. Schließlich ist eine Skalierbarkeit des Headend-Systems möglich, da zusätzliche Baugruppen - z. B. Standard-IT-Server oder proprietäre busfähige Baugruppen - an das Bussystem anschließbar sind.

An das Bussystem sind sämtliche Baugruppen bzw. Verarbeitungseinheiten des Headends anzuschließen, um die Vorhaltung von weiteren standardisierten oder nichtstandardisierten Übertragungsverbindungen im Headend für nicht busfähige Baugruppen bzw. Verarbeitungseinheiten zu vermeiden, die die Kosten für Betrieb und Wartung des Headends unnötig erhöhen.

Als Bussystem wird bevorzugt ein Ethernet-Bus verwendet, der eine ausreichende Bandbreite besitzt, um unkomprimierte Audio- und Video-Daten in Datenströmen des Headends übertragen zu können. Bei den Punkt-zu-Punkt-Übertragungsverbindungen handelt es sich bevorzugt um die in der digitalen Rundfunktechnik weit verbreiteten SMPTE- und ASI-Verbindungen, über die das Headend mit den anderen Funktionsbereichen Studio, Playout (Programm-Zusammenstellung) und Delivery (Aussendung) eines digitalen Rundfunksystems verbunden ist.

Bei den Verarbeitungseinheiten zur Ausführung der Signal- und Datenverarbeitungsfunktionen des Headends werden Server eingesetzt, die den Anforderungen des Bussystem-Standards, bevorzugt des Ethernet-Busstandards, genügen. Bei den Baugruppen des Ethernet-Buses wie auch bei den an den Ethernet-Bus anschließbaren Servern handelt es sich um kostengünstige Standard-Produkte aus dem Informationstechnologie-Sektor. Der Ethernet-Bus kann entweder als Standard-IT-Server mit einer Software, die den Datenverkehr zwischen den einzelnen Busteilnehmern realisiert, oder als in Hardware realisierter Ethernet-Switch implementiert sein. Auf diese Weise ist ein Headend, das relative kurze Lebenszyklen zwischen drei und fünf Jahren aufweist, vergleichsweise kostengünstig zu realisieren.

Bei Ausfall eines Servers sind redundante Server mit dem Bussystem, insbesondere mit dem Ethernet-Bus, verbunden, die die Funktionen des ausgefallenen Servers übernehmen. Hierbei wird der Ausfall eines Servers über das Bussystem von den anderen am Bussystem beteiligten Servern erkannt.

In einem Headend sind auch proprietäre Baugruppen, beispielsweise eine Conditional-Access-System Baugruppe, in der die für die Verschlüsselung der Audio- und Video-Daten im Transportdatenstrom benötigten Schlüssel aufbewahrt sind, an das Bussystem anschließbar. Aufgrund der sehr hohen Sicherheitsanforderungen an die Speicherung der geheimen Schlüssel wird ein Conditional-Access-System nicht auf einem Standard-IT-Server verwirklicht, sondern ist als separate busfähige Baugruppe realisiert.

Ein Ausführungsbeispiel des erfindungsgemäßen Headends mit Bussystem wird im Folgenden anhand der Zeichnung im Detail beispielhaft erläutert. Die Figuren der Zeichnung zeigen:
- Fig. 1: ein bislang verwendetes Blockdiagramm der Übertragungstechnik in einem Headend und
- Fig. 2: ein Blockdiagramm eines erfindungsgemäßen Headends mit Bussystem.

Das erfindungsgemäße Headend mit Bussystem wird im Folgenden anhand des Blockdiagramms in Fig. 2 erläutert:
Das Übertragungssystem im Headend ist als Bussystem 1 realisiert, das aufgrund des hohen Bandbreitenbedarfs als Ethernet-Bus nach dem Ethernet-Standard IEEE 802.4 Clause 40 und höher oder 1000Base-T ausgeführt ist. Auf dem Bussystem, insbesondere auf dem Ethernet-Bus, werden Internetbasierte Datenpakete als Einzel-Datenpakete oder zusammengesetzt in einem aus mehreren Datenpaketen bestehenden Datenstrom übertragen. Um einen korrekten Datentransfer auf dem Bussystem zu gewährleisten, enthält jedes busfähige Datenpaket eine Medium-Access-Control(MAC)-Adresse (Medium-Zugriff-Adresse) für die Quelle und das Ziel des Datentransfers.

Mit dem Bussystem 1 ist mindestens eine Verarbeitungseinheit 2₁,...,2ₙ verbunden, die typischerweise als busfähiger Standard-IT-Server ausgeführt ist. Die Anzahl der Datenverarbeitungseinheiten 2₁,...,2ₙ richtet sich nach der Verarbeitungsleistung der einzelnen Verarbeitungseinheit 2₁,...,2ₙ einerseits und dem Bedarf an Verarbeitungsleistung der für die Signal- und Datenverarbeitung der im Headend realisierten Funktionen andererseits. Zu den wesentlichen auf den Verarbeitungseinheiten 2₁,...,2ₙ jeweils implementierten Headend-Funktionen zählen:
- Kodieren,
- Dekodieren,
- Multiplexen,
- Verschachteln (Scramble),
- statistischen Multiplexen,
- Einfügen von programmrelevanten Informationen (Program-Service-Information (PSI), System-Information (SI), Electronic-Service-Guide (ESG)) in den Transportdatenstrom und
- Einfügen von Referenzzeit-Informationen (Megaframe-Initialization-Packet (MIP)) in den Transportdatenstrom. Die Verarbeitungseinheiten 2₁,...,2ₙ können auch eine oder mehrere Verarbeitungseinheiten enthalten, auf denen im normalen Betrieb des Headends keine Headend-Funktionen implementiert sind und die erst bei Ausfall einer Verarbeitungseinheit, auf der eine oder mehrere Headend-Funktionen implementiert sind und im normalen Betrieb des Headends ablaufen, die Headend-Funktionen der ausgefallenen Verarbeitungseinheit übernehmen.

Zusätzlich sind an das Bussystem 1 auch proprietäre Baugruppen bzw. Verarbeitungseinheiten anschließbar, die den Hardware- und Software-Anforderungen des Bussystems 1 genügen müssen. Eine derartige Baugruppe ist beispielsweise die das Conditional-Access-System (CAS) (Konditioniertes Zugriffssystem) beinhaltende proprietäre Verarbeitungseinheit 3. Die Auslagerung des Conditional-Access-System, die die geheimen Schlüssel zur Verschlüsselung der Audio- und Video-Daten für die Transportdatenströme speichert, auf die proprietäre Verarbeitungseinheit 3 erfolgt aufgrund erhöhter Sicherheitsanforderungen, die bei Standard-IT-Baugruppen nicht gegeben ist.

Um über das Bussystem 1 nicht nur einen Datentransfer zwischen einzelnen Verarbeitungseinheiten 2₁,...,2ₙ zu verwirklichen, sondern auch einen Datentransfer zwischen einzelnen Verarbeitungseinheiten 2₁,...,2ₙ und den in einem digitalen Rundfunksystem etablierten Standardübertragungsverbindungen SMPTE und ASI an den Eingangs- und Ausgangsschnittstellen des Headends zu realisieren, ist mit dem Bussystem 1 eine erste Konvertierungseinheit 4 zur Umwandlung von auf dem Bussystem 1 transferierbaren Datenpaketen in auf den Punkt-zu-Punkt-Übertragungsverbindungen nach dem ASI-Übertragungsstandard transferierbaren Datenpaketen und eine zweite Konvertierungseinheit 5 zur Umwandlung von auf den Punkt-zu-Punkt-Übertragungsverbindungen nach dem SMPTE- und/oder ASI-Übertragungsstandard transferierbaren Datenpaketen in auf dem Bussystem 1 transferierbare Datenpakete vorgesehen. Typischerweise werden ein oder mehrere ASI- oder SMPTE-Datenpakete in ein Ethernet-Datenpaket gepackt bzw. ein Ethernet-Datenpaket in ein oder mehrere ASI- oder SMPTE-Datenpaket gewandelt.

Die Erfindung ist nicht auf die dargestellte Ausführungsform beschränkt, sondern wird durch die folgenden Ansprüche definiert.

## Patentansprüche

1. Verteilerkopf in einem digitale Rundfunk-Übertragungssystem mit
einem Bussystem (1), mindestens einer busfähigen Verarbeitungseinheit (2₁,...,2ₙ) zur Durchführung von Signal- und/oder Datenverarbeitungsfunktionen,
einer ersten Konvertierungseinheit (4) zur Umwandlung von im Bussystem (1) transferierbaren Datenpaketen in Datenpakete, die in einer Punkt-zu-Punkt-Übertragungsverbindung transferierbar sind, und
einer zweiten Konvertierungseinheit (5) zur Umwandlung von in der Punkt-zu-Punkt-Übertragungsverbindung transferierbaren Datenpaketen in im Bussystem (1) transferierbare Datenpakete,
wobei die Punkt-zu-Punkt-Übertragungsverbindung unidirektional ist, und
wobei die Punkt-zu-Punkt-Übertragungsverbindung eine Übertragungsverbindung zur Übertragung von nicht komprimierten Audio- und/oder Video-Daten und/oder zur Übertragung von komprimierten Audio- und/oder Video-Daten zwischen dem Verteilerkopf und den Funktionsbereichen des Studios, der Programm-Zusammenstellung und der Aussendung ist.

2. Verteilerkopf nach Anspruch 1,
**dadurch gekennzeichnet,**
**dass** sämtliche Verarbeitungseinheiten (2₁,...,2ₙ) des Verteilerkopfs mit dem Bussystem (1) verbunden sind.

3. Verteilerkopf nach Anspruch 1 oder 2,
**dadurch gekennzeichnet,**
**dass** das Bussystem (1) ein Ethernet-Bus ist.

4. Verteilerkopf nach einem der Ansprüche 1 bis 3,
**dadurch gekennzeichnet,**
**dass** die Punkt-zu-Punkt-Übertragungsverbindung eine Übertragungsverbindung nach dem SMPTE-Standard und/oder nach dem ASI Standard ist.

5. Verteilerkopf nach einem der Ansprüche 1 bis 4,
**dadurch gekennzeichnet,**
**dass** die busfähige Verarbeitungseinheit (2₁,...,2ₙ) ein den Anforderungen des Bussystem-Standards genügender Server für die Durchführung von Signal- und/oder Datenverarbeitungsfunktionen des Kodierens, des Dekodierens, des Multiplexens, des Verschachtelns, des Einfügens von TV-Programm-relevanten Informationen und/oder von Referenzzeit-Informationen in den vom Verteilerkopf erzeugten Transportdatenstrom ist.

6. Verteilerkopf nach Anspruch 5,
**dadurch gekennzeichnet,**
**dass** mit dem Bussystem (1) zu den für die Durchführung der Signal- und/oder Datenverarbeitungsfunktionen benötigten Servern zusätzliche redundante Server zur Übernahme der Signal- und/oder Datenverarbeitungsfunktionen des ausgefallenen Servers verbunden sind.

7. Verteilerkopf nach einem der Ansprüche 1 bis 6,
**dadurch gekennzeichnet,**
**dass** an das Bussystem (1) auch proprietäre Verarbeitungseinheiten, eine Conditional-Access-System-Baugruppe (3), zur Aufbewahrung von für eine Verschlüsselung von Audio- und Videodaten im Transportdatenstrom benötigten Schlüssel, angeschlossen ist.

## Claims

1. Distribution head in a digital radio transmission system with
a bus system (1), at least one bus-compatible processing unit (2₁, ..., 2ₙ) for performing signal and/or data processing functions, a first converting unit (4) for converting data packets which are transferable in the bus system (1) into data packets which are transferable in a point-to-point transmission connection, and a second converting unit (5) for converting data packets which are transferable in the point-to-point transmission connection into data packets which are transferable in the bus system (1),
wherein the point-to-point transmission connection is unidirectional, and
wherein the point-to-point transmission connection is a transmission connection for transmission of uncompressed audio and/or video data and/or for transmission of compressed audio and/or video data between the distribution head and the function areas of the studio, programme compilation and transmission.

2. Distribution head according to claim 1,
**characterised in that**
all the processing units (2₁,..., 2ₙ) of the distribution head are connected with the bus system (1).

3. Distribution head according to claim 1 or 2,
**characterised in that**
the bus system (1) is an Ethernet bus.

4. Distribution head according to one of claims 1 to 3,
**characterised in that**
the point-to-point transmission connection is a transmission connection according to the SMPTE standard and/or according to the ASI standard.

5. Distribution head according to one of claims 1 to 4,
**characterised in that**
the bus-compatible processing unit (2₁, ..., 2ₙ) is a server conforming to the requirements of the bus-system standard for performing signal and/or data processing functions of encoding, decoding, multiplexing, scrambling, insertion of TV programme-relevant information and/or reference time information into the transport data stream generated by the distribution head.

6. Distribution head according to claim 5,
**characterised in that**
the bus system (1) to the servers required for performing the signal and/or data processing functions connects additional redundant servers for taking over the signal and/or data processing functions of the server that has failed.

7. Distribution head according to one of claims 1 to 6,
**characterised in that**
in addition the bus system (1) is also connected to proprietary processing units, a conditional access system unit (3) for safekeeping of codes required for encoding of audio and video data in the transport data stream.

## Revendications

1. Tête de distribution dans un système de transmission radiophonique avec un système de bus (1), au moins une unité de traitement (2₁, ..., 2ₙ) compatible bus pour la mise en oeuvre de fonctions de traitement de signal et/ou de données, une première unité de conversion (4) pour la transformation de paquets de données transférables dans le système de bus (1) en paquets de données qui sont transférables dans une liaison de transmission point à point, et une seconde unité de conversion (5) pour la transformation de paquets de données transférables dans la liaison de transmission point à point en paquets de données transférables dans le système de bus (1),
dans lequel la liaison de transmission point à point est unidirectionnelle, et
dans lequel la liaison de transmission point à point est une liaison de transmission pour la transmission de données audio et/ou vidéo non compressées et/ou pour la transmission de données audio et/ou vidéo compressées entre la tête de distribution et les domaines fonctionnels du studio, la composition du programme et l'émission.

2. Tête de distribution selon la revendication 1,
**caractérisée en ce que**,
toutes les unités de traitement (2₁, ..., 2ₙ) de la tête de distribution sont reliées au système de bus (1).

3. Tête de distribution selon la revendication 1 ou 2,
**caractérisée en ce que**,
le système de bus (1) est un bus Ethernet.

4. Tête de distribution selon l'une des revendications 1 à 3,
**caractérisée en ce que**,
la liaison de transmission point à point est une liaison de transmission conforme à la norme SMPTE et/ou conforme à la norme ASI.

5. Tête de distribution selon l'une des revendications 1 à 4,
**caractérisée en ce que**,
l'unité de traitement (2₁, ..., 2ₙ) compatible bus est un serveur satisfaisant aux exigences de la norme de système de bus pour la mise en oeuvre de fonctions de traitement de signal et/ou de données du codage, du décodage, du multiplexage, de l'empaquetage, de l'insertion d'informations relatives à des programmes TV et/ou d'informations de temps de référence dans le flux de transport de données produit par la tête de distribution.

6. Tête de distribution selon la revendication 5,
**caractérisée en ce que**,
avec le système de bus (1) aux serveurs nécessaires à la mise en oeuvre des fonctions de traitement de signal et/ou de données sont reliés des serveurs redondants supplémentaires pour la prise en charge des fonctions de traitement de signal et/ou de données du serveur défaillant.

7. Tête de distribution selon l'une des revendications 1 à 6,
**caractérisée en ce que**,
au système de bus (1) sont également raccordées des unités de traitement propriétaires, un assemblage de système à accès conditionnel (3), pour la conservation de clés nécessaires à un cryptage de données audio et vidéo dans le flux de transport de données.
